(19) Europäisches Patentamt
European Patent Office
Office européen des brevets

(11) Numéro de publication: **0 181 254 B1**

(12) **FASCICULE DE BREVET EUROPEEN**

(45) Date de publication du fascicule du brevet: **01.06.88**

(51) Int. Cl.⁴: **B 01 J 37/20**, B 01 J 27/30

(21) Numéro de dépôt: **85402044.3**

(22) Date de dépôt: **22.10.85**

(54) **Procédé de présulfuration de catalyseur de traitement d'hydrocarbures.**

(30) Priorité: **30.10.84 FR 8416540**
**04.07.85 FR 8510396**

(43) Date de publication de la demande:
**14.05.86 Bulletin 86/20**

(45) Mention de la délivrance du brevet:
**01.06.88 Bulletin 88/22**

(84) Etats contractants désignés:
**AT BE DE GB IT LU NL SE**

(56) Documents cités:
**FR - A - 236 489**
**FR - A - 2 476 118**
**US - A - 3 715 404**
**US - A - 4 132 745**
**US - A - 4 277 587**

(73) Titulaire: **EURECAT EUROPEENNE DE RETRAITEMENT DE CATALYSEURS, Quai Jean Jaurès B.P. 45, F-07800 La Voulte-sur-Rhône (FR)**

(72) Inventeur: **Toulhoat, Hervé, 51, avenue Charles Tellier, F-78800 Houilles (FR)**
Inventeur: **Berrebi, Georges, 17, rue Barnave, F-26500 Bourg-lès-Valence (FR)**

(74) Mandataire: **Andreeff, François, INSTITUT FRANCAIS DU PETROLE 4, avenue de Bois-Préau, F-92502 Rueil-Malmaison (FR)**

**EP 0 181 254 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de présulfuration de catalyseur de traitement d'hydrocarbures et/ou de préconditionnement d'un catalyseur pour être ensuite présulfuré.

Il est souvent souhaitable de procéder à une sulfuration (généralement appelée «présulfuration») des métaux entrant dans la composition de certains catalyseurs de raffinage et/ou d'hydroconversion d'hydrocarbures soit lorsque ces catalyseurs sont neufs soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou d'hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible. De telles réactions de désulfuration, généralement effectuées en présence d'hydrogène, entre 200 et 400°C, sous une pression comprise entre par exemple 5 et 60 bars (95 et 6 MPa), avec une vitesse spatiale (exprimée en $m^3$ de charge injectée liquide par $m^3$ de catalyseur et par heure) comprise entre 0,5 et 15, avec une pression partielle d'hydrogène comprise entre 4 et 60 bars (0,4 et 6 MPa), la charge étant par exemple une essence distillant généralement entre 30 et 220°C et pouvant posséder un indice de brome compris entre 40 et 80 (g/100 g), contenant environ 15 à 45%, en volume, d'oléfines (essentiellement des monooléfines des quantités minimes de dioléfines) et 15 à 25% d'hydrocarbures aromatiques.

Le catalyseur utilisé pour ce type de désulfuration ou d'hydrodésulfuration renferme un support généralement non acide par exemple une alumine ou des mélanges d'alumine (brevet US-A-4 334 982) ou tout autre support adéquat à base d'au moins un oxyde d'un métal ou de métalloïde [magnésie (US-A-4 132 632, US-A-4 140 626), silice, silice-aluminés, silicemagnésies, les silice-fluorées, les alumines bores, les argiles, les charbons, les alumines fluorées] ce ou ces mélanges de support pouvant au moins en partie se présenter sous forme amorphe ou sous forme cristallisée (zéolites) et le catalyseur renfermant en outre 0,2 à 30% d'au moins un métal actif des groupes VI, VIII ou autre choisi par exemple dans le groupe constitué, par le cobalt, le molybdène, le nickel et le tungstène (US-A-3 732 155 et 3 804 748). On utilise généralement un couple de deux de ces métaux, par exemple l'un des couples cobalt-molybdène, nickel-molybdène, cobalt-tungstène, tungstène-molybdène, cobalt-nickel, nickel-tungstène. On peut toujours à titre d'exemple utiliser un métal noble du groupe VIII de la famille du platine: Pt, Pd .... US-A-4 098 682.

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110% environ des quantités stoechiométriques de soufre calculées sur les quantités de sulfure de formule, (selon les métaux présents), $Co_9S_8$, Mo $S_2$, $WS_2$ et $Ni_3$ $S_2$.

Cette sulfuration (présulfuration) est effectuée, dans l'art antérieur, à une température voisine ou plus élevée (ainsi supérieure à 180°C et plus particulièrement au dessus de 250°C) par rapport à la température réactionnelle choisie pour la réaction d'hydrodésulfuration, pendant quelques heures, au moyen d'un mélange d'hydrogène sulfuré généralement dilué dans de l'hydrogène (proportion d'hydrogène sulfuré dans l'hydrogène de l'ordre de 0,5 à 5% en volume) avec une vitesse spatiale adéquate de l'ordre, par exemple, de environ 1.000 à 3.000 litres de gaz dans les conditions normales de température et pression par litre de catalyseur et par heure (US-A-4 334 982). La sulfuration (ou présulfuration) proprement dite peut être effectuée par palier de température (brevet français FR-B-2 476 118). On peut utiliser divers agents de sulfuration, autres que l'hydrogène sulfuré ($H_2S$) et par exemple un composé sulfuré de la famille des mercaptans, le sulfure de carbone ($CS_2$), des sulfures ou des disulfures, les composés thiophéniques et, de préférence le diméthylsulfure (DMS) et le diméthyldisulfure (DMDS).

Une sulfuration ou présulfuration de catalyseur régénéré est également souhaitable dans les réactions d'hydroreformage d'hydrocarbures (reforming notamment d'un naphta) et de production d'hydrocarbures aromatiques («Aromizing») par exemple la production de benzène, de toluène et de xylènes (ortho, méta ou para), soit à partir d'essences insaturées ou non (par exemple des essences de pyrolyse, de craquage, en particulier de steam cracking (craquage à la vapeur), ou de reformage catalytique), soit encore à partire d'hydrocarbures naphténiques capables par déshydrogénation de se transformer en hydrocarbures aromatiques.

Les conditions générales de ces réactions sont généralement les suivantes: température moyenne comprise entre 400 et 600°C, pression comprise entre 1 et 60 bars (0,1 et 6 MPa), vitesse horaire comprise entre 0,1 et 10 volumes de naphta liquide par volume de catalyseur et le taux de recyclage compris entre 0,5 et 20 moles d'hydrogène par mole de charge.

Le catalyseur peut renfermer, par exemple, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc.... ou des mélanges de tels supports). La teneur totale en métaux nobles est comprise par exemple entre 0,1 et 5% en poids par rapport au catalyseur. Le catalyseur également peut renfermer généralement au moins un halogène (chlore, fluor, etc....) avec une teneur pondérale de 0 à 15%. Eventuellement encore, le catalyseur renferme au moins un métal promoteur choisi dans les groupes les plus divers de la classification périodique des éléments, la teneur pondérale en métal promoteur variant par exemple entre 0,1 et 15%. On peut citer ainsi les métaux des groupes VIII, VI A et VI B, I B et II B, III A, IV A, V A et V B,

IV B, III B, I A et I B ainsi que les mêtaux de la famille des lanthanides: on citera plus particulièrement, outre les métaux du groupe VIII nobles ou non nobles, le cuivre, l'argent, l'or, le germanium, l'étain, l'indium. le thallium, le manganèse, le rhénium, le tungstène, le molybdène, le niobium et le titane.

Pour ces réactions de reformage catalytique ou de production d'hydrocarbures aromatiques, la sulfuration du catalyseur neuf ou régénéré est accompagnée d'une reduction à l'hydrogène de catalyseur et s'effectue en tête du réacteur ou au voisinage de la tête du réacteur. La température dans la zone de sulfuration est imposée par la température à laquelle s'effectue la réduction, soit généralement entre 480 et 600°C dans la plupart des cas. La difficulté de ce type de sulfuration sur le site, c'est-à-dire au voisinage des réacteurs a entrainé des mises en œuvre de sulfuration souvent fastidieuses quoiqu'efficaces (US-A-4 172 027).

L'agent de sulfuration utilisé est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogène. La pression utilisée est celle qui règne dans le réacteur de reforming ou de production d'hydrocarbures aromatiques, la durée de la réaction variant de quelques minutes à quelques jours selon les conditions opératoires choisies. (voir US-A-4 172 027).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation, de déalkylation, d'hydrodéalkylation, de déalkylation à la vapeur d'eau, d'isomérisation et d'hydrodémétallisation (ou démétallation) des charges lourdes.

La sulfuration ou présulfuration, lorsqu'elle est nécessaire peut s'opérer avantageusement selon l'une ou l'autre des techniques de l'art antérieur rappelés ci-dessus.

Les métaux des catalyseurs utilisés en raffinage, hydroraffinage ou en pétrochimie, qu'ils soient neufs ou régénérés, sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en œuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'à permis le procédé efficace de la demande de brevet Européen EP-A-130 850 dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur; le procédé d'incorporation dudit composé sulfuré peut être effectué en hors site également sur un catalyseur neuf ou régénéré, avant sa mise en œuvre dans l'unité industrielle.

D'une façon plus précise, dans la demande de brevet Européen EP-A-130 850, le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement «hors site» ou «ex situ», qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement «in situ») c'est-à-dire en tête des réacteurs ou dans des zones plus au moins en communication directe avec ces réacteurs, nécessitant d'opérer dans des conditions opératoires, (de température, pression ou autres), imposées au moins en partie par les conditions opératoires des réacteurs eux mêmes ou des annexes de ces réacteurs (zone d'hydrogénation préalable du catalyseur par exemple).

En résumé, l'invention de la demande de brevet européen EP-A-130 850 concerne un procédé, permettant, lorsque le catalyseur sera soumis dès son démarrage de préférence sur le site («in situ») à la réaction classique d'activation en présence d'hydrogène, (généralement au-dessus de 100°C), de procéder, ensuite grâce à la présence d'hydrogène sur le site, à la sulfuration ou taux requis, stoechiométrique ou non stoechiométrique, du ou des métaux actifs entrant dans la composition du catalyseur. Le procédé consiste à incorporer en l'absence d'hydrogène dans la porosité du catalyseur neuf ou régénéré au moins un agent de sulfuration de formule générale

$$R - S_{(n)} - R'$$

où R, R' et n sont définis ci-dessos.

La sulfuration du catalyseur peut ainsi être faite comme suit: dans une première étape réalisée «ex-situ», en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale:

$$R - S_{(n)} - R'$$

ledit agent de sulfuration étant utilisé en solution dans un solvant; dans une deuxième étape, réalisée «in situ», et de préférence au-dessus de 150°C,

on procède à une étape d'activation du catalyseur effectuée en présence d'hydrogène, la quantité requise de soufre se fixant grâce à la présence d'hydrogène, sur le ou les métaux entrant dans la composition dudit catalyseur. C'est cette dernière étape que l'on perfectionne dans le présente invention.

L'objet de la demande de brevet européen EP-A-130 850 est donc de conduire «ex-situ» la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être présulfurés.

Le raffineur, ou tout autre utilisateur, n'a plus donc qu'à réactiver ce catalyseur en présence d'hydrogène à une température par exemple de 100 à 200°C pour un catalyseur de désulfuration, de 400 à 600°C environ, pour un catalyseur de reformage catalytique ou de production d'hydrocarbures aromatiques, afin de faire réagir le soufre sur les métaux contenus et démarrer aussitôt la réaction de raffinage ou de conversion d'hydrocarbures par injection de la charge à traiter.

Dans le polysulfure de formule

$$R - S_{(n)} - R'$$

n est un nombre entier de 3 à 20, de préférence de 4 à 8 et plus particulièrement de 5 à 7; R et R', identiques ou différents, représentent des radicaux organiques renfermant chacun 1 à 150 atomes de carbone par molécule, de préference soit 10 à 60 atomes de carbone soit 5 à 40 atomes de carbone et plus particulièrement 7 à 16, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéro-atome. R' éventuellement peut également être un atome d'hydrogène.

On peut citer, à titre d'exemple préféré de polysulfure, le ditertiododécylpolysulfure (n = 5) où R et R' sont chacun un radical dodécyle.

Ce produit est commercialisé par exemple par Elf Aquitaine sous le nom TPS 32, notamment parce qu'il contient 32% poids environ de soufre.

On peut citer également le ditertionony lpolysulfure (n = 5) où R et R' sont chacun un radical nonyle.

Ce produit est commecialisé par Elf Aquitaine sous le nom TPS 37, notamment parce qu'il contient 37% poids environ de soufre ou par PENWALT sous le nom de TNPS.

Pour des raisons de procédure, on peut évidemment utiliser ces agents de sulfuration du type polysulfure seuls ou en mélange entre eux dans des proportions judicieusement choisies.

La première étape rappelée ci-dessus est effectuée en l'absence d'hydrogène et permet d'obtenir avec une très grande précision le degré de sulfuration total ou partiel demandé par l'utilisateur. Cette incorporation de soufre est effectuée entre 0 et 50°C et de préférence entre 10 et 35°C et de préférence encore à la température ambiante.

L'agent de sulfuration est utilisé, dilué dans un solvant adéquat qui dépend notamment de la nature de l'agent de sulfuration c'est-à-dire de R ou de R', radicaux qui déterminent la teneur en soufre incorporé dans le catalyseur généralement par capillarité ou par porosité. Les processus de sulfuration varient en fait selon les coupes à traiter ultérieurement en présence des catalyseurs traités conformement à l'invention. Le solvant choisi peut être ainsi un des solvants suivants utilisés seuls ou en mélange ensemble:

— une essence légère bouillant par exemple entre environ 60 et 95°C
— une essence de type hexane bouillant entre 63 et 68°C environ
— une essence de type F bouillant entre environ 100 et 160°C et contenant généralement 10 à 20% d'hydrocarbures aromatiques, par exemple 15%, en volume
— une essence de type «white spirit» bouillant entre environ 150 et 250°C et renfermant généralement 14 à 22% d'hydrocarbures aromatiques, par exemple 17%, en volume,
— ou toute coupe hydrocarbonnée ou non, équivalente aux essences précédentes.

Ultérieurement, sur le site ou à proximité du site (sur lequel le catalyseur sera utilisé pour le traitement de diverses charges), lors de la réaction classique d'activation, effectuée en présence d'hydrogène (deuxième étape du procédé de la demande de brevet européen EP-A-130 850), l'agent de sulfuration introduit dans le catalyseur en quantités prédéterminées, sera capable de donner naissance à de l'hydrogène sulfuré lequel, en présence d'hydrogène, conduira au sulfure ou aux sulfures désirés du ou des métaux présents dans le catalyseur selon par exemple les réactions schématiques exothermiques (1) (2) (3) suivantes pour ce qui concerne, à titre d'exemples, les sulfurations du molybdène, du cobalt et du nickel:

$$MoO_3 \rightarrow MoS_2$$

$$9\ CoO \rightarrow Co_9S_8$$

$$3\ NiO \rightarrow Ni_3S_2$$

L'emploi d'un solvant adéquat, dans lequel est dissous l'agent de sulfuration, permet de jouer sur la chaleur latente de vaporisation du solvant choisi, donc d'absorber une partie au moins de l'exothermicité de la réaction de sulfuration.

A l'issue de dépôt de soufre, une partie au moins du solvant, reste dans le catalyseur. Il est donc possible d'éliminer ce solvant (par strippage à l'azote liquide par exemple, ou par tout autre moyen). Mais ce solvant laissé dans le catalyseur peut s'éliminer ultérieurement et sans aucun dommage, dans le réacteur d'utilisation du catalyseur, c'est-à-dire sur le site («in situ»).

Dans la première étape, le volume de polysulfure et du solvant choisi doit de préférence représenter environ une valeur égale au volume poreux du lit de catalyseur à traiter: ainsi, à titre d'exemple, pour 100 g de catalyseur régénéré ou neuf (forme oxydée)

il s'agit donc de mettre environ 9 grammes de soufre en polysulfure dans environ 45 $cm^3$ de mélange total polysulfure plus solvant (white spirit par exemple). L'adsorption de ce polysulfure se fait généralement à l'air ambiant. Le catalyseur peut ensuite être éventuellement séché sous courant d'air chaud, puis conditionné pour être expédié, selon une méthode préférée, chez le raffineur.

Dans la présente invention, on à découvert que pendant une première partie de ladite deuxième étape, la présence d'hydrogène non seulement n'est pas nécessaire mais qu'au contraire, son absence est même souhaitable, à la condition toutefois que pendant la fin de cette deuxième étape, effectuée ex situ ou in situ, et éventuellement en présence d'hydrogène, le catalyseur soit porté au moins une minute à une température au moins égale à 275°C. La première partie de cette deuxième étape est effectuée in situ ou ex situ. Ainsi la première partie de la deuxième étape est effectuée en l'absence d'hydrogène sous atmosphère d'un gaz inerte (azote, argon, hélium, etc,...), ou d'un gaz non inerte ou d'un mélange de tels gaz, par exemple l'air, pendant environ au moins 5 minutes, entre 65 et 275°C. D'une façon plus précise, si l'on opère en présence d'un gaz inerte, on choisira d'opérer de préférence pendant 1 à 3 heures environ, sous une pression comprise entre environ 0,5 et 70 bars (0,05 et MPa), à une température comprise entre 65 et 275°C, de préférence entre 85 et 260°C et plus particulièrement entre 95 et 150°C. Si l'on choisit d'opérer en présence d'un gaz non inerte tel que l'air notamment, il conviendra d'opérer pendant environ 5 minutes (ou mieux 9 minutes) à 10 heures, sous 0,5 à 70 bars (0,05 à 7 MPa), à une température inférieure à 200°C et de préférence inférieure à 150°C.

Si l'on travaille, sous air, à une température inférieure à 200°C, on amorce la combustion du soufre fixé, qui se dégage sous forme de $SO_2$; celà est contraire au but recherché, mais toutefois l'avantage de travailler sous air est économique du fait qu'il n'est plus utile d'utiliser des installations coûteuses nécessaires à l'emploi d'une atmosphère inerte.

Au cours de la deuxième partie de la deuxième étape, le catalyseur est porté soit à une température égale à au moins 275°C, pendant au moins 1 minute, soit de préférence entre 300 et 400°C lorsque la première partie de la deuxième étape est conduite entre 85 et 260°C, pendant 1 et 3 heures, soit encore entre 275 et 380°C, lorsque la première partie de la deuxième étape est effectuée en présence d'air, pendant 9 minutes à 10 heures, à une température inférieure à 150°C. Cette deuxième partie de la deuxième étape peut être conduite en présence d'hydrogène.

La deuxième partie de la deuxième étape est généralement effectuée in situ et peut donc se confondre avec le démarrage ou la mise en marche proprement dite de la réaction de raffinage ou de pétrochimie pour laquelle est conçu le catalyseur préparé selon la présente invention, dans le cas précisement où une telle réaction est faite au dessus de 275°C.

Lorsque la température choisie pour la réaction de raffinage ou de pétrochimie est inférieure à 275°C (par exemple, ce peut être le cas des hydrodésulfurations d'essences ou de kérosènes), il suffit alors d'abaisser la température utilisée pour l'activation du catalyseur dans la deuxième partie de la deuxième étape après cette étape à la température convenable pour la réaction de raffinage ou de pétrochimie.

On a constaté que dans la première partie de la deuxième étape, en dépit de l'absence d'hydrogène, le catalyseur se sulfure, c'est-à-dire que les oxydes des métaux actifs du catalyseurs se transforment en sulfures selon les réactions chimiques données ci-dessus. Ce phénomène s'observe aisément par analyse du catalyseur, lequel d'ailleurs devient noir. Par contre, des tests de chimisorption montrent que tant que le catalyseur n'atteint pas la température de 275°C et ne reste pas au moins quelques minutes à au moins 275°C, ce catalyseur reste démuni d'activité catalytique.

A noter que le gaz utilisé dans la première partie de la deuxième étape peut être au moins en partie de la vapeur d'eau, surchauffée à 110°C au moins; on peut également utiliser de l'air humide. Dans ce cas, on peut par exemple opérer avec une humidité relative de l'ordre de 0 à 60% en volume à l'étape de séchage, et/ou avec une préactivation conduite entre 105 et 200°C, de préférence entre 110 et 170°C, avec un gaz dont la teneur en eau est comprise entre 50 et 100% (vapeur d'eau pure), de préférence entre 90 et 100%.

Bref, au cours de la première partie de la deuxième étape, les oxydes des métaux actifs se transforment en sulfures, l'activité catalytique de ces sulfures ne se manifestant que lorsque le catalyseur atteindra 275°C environ, éventuellement en présence d'hydrogène (deuxième partie de la deuxième étape). Procéder selon la technique de l'invention fait apparaître immédiatement plusieurs avantages. La première partie de la deuxième étape étant effectuée en l'absence d'hydrogène, l'admission d'hydrogène est plus tardive que dans le procédé de la demande de brevet européen EP-A-130 850 d'où ici une consommation moindre en hydrogène. La première partie de cette deuxième étape n'est plus exothermique ce qui est très appréciable, (notamment du point de vue sécurité), pour le raffineur, si cette première partie de deuxième étape est effectuée in situ. A l'issue de la première partie de la deuxième étape, le catalyseur n'est absolument pas pyrophorique tant qu'il n'a pas atteint la température de 275°C environ, c'est-à-dire est incapable d'adsorber de l'oxygène (processus exothermique à l'origine de la pyrophoricité des catalyseurs sulfurés). Ce catalyseur est donc insensible à l'air et est manipulable sans aucune précaution particulière. Donc si on le désire, cette première partie de deuxième étape (transformation des oxydes des métaux actifs en sulfures) peut être effectuée sur le site de la régénération («ex situ») et ensuite, le catalyseur, éventuellement préalablement séché, insensible à l'air, est transporté par camion ou par avion par exemple, non seulement présulfuré comme enseigné dans la demande de brevet européen EP-A-130 850 (soufre incorporé dans les pores du catalyseur sous forme de polysulfur organique) mais déjà sulfuré, depuis le site de régénération jusqu'à chez le raffineur ou chez le pétrochimiste, ces derniers n'ayant plus alors qu'à mettre le catalyseur dans l'unité de raffinage ou de pétrochimie pour laquelle le catalyseur a été concu, et porter le catalyseur à une température au moins égale à 275°C, pendant au moins une minute, en y introduisant éventuellement de l'hydrogène (indispensable de toute façon pour la suite du fonctionnement de l'unité). A ce stade, d'autres avantages apparaissent aussi bien pour celui qui a effectué la régénération du catalyseur que pour l'utilisateur de catalyseur, dans le cas où la première partie de la deuxième étape est faite «ex situ»: au cours de cette première partie de la deuxième étape, le solvant dans lequel était dissou le polysulfure organique s'évapore, (white spirit par exemple). Donc ce solvant reste sur le site de régénération et est récupéré par celui qui a procédé à la régénération et à la présulfuration du catalyseur. Le raffineur ou le pétrochimiste n'ont pas, eux de leur côté, à prévoir des conduites d'extraction de ce solvant. De même, l'eau qui peut se former dans les réactions de sulfuration des oxydes de métaux actifs, est éliminée sur le site de régénération et le raffineur ou le pétrochimiste n'ont pas à prévoir dans leurs unités, des conduites d'élimination d'eau.

Au cours de la deuxième partie de la deuxième étape (activation) le catalyseur devient alors susceptible d'adsorber de l'oxygène, donc d'activer les réactions de raffinage et de pétrochimie. Cette activation peut être effectuée in situ c'est-à-dire dans le réacteur de raffinage ou de pétrochimie mais également ex situ, si par exemple le souhait s'en fait sentir, ne serait ce que parce que, lorsque la réaction de raffinage se fait à basse température, le réacteur choisi pour une telle réaction n'a pas été construit pour supporter des températures élevées (contraintes mécaniques); et on a également constaté que lorsque le catalyseur subit le traitement de la présente invention, son activité était améliorée non seulement par rapport aux techniques de sulfurations classiques (par $H_2S$ par exemple) mais également par rapport à la technique de la demande de brevet européen EP-A-130 850. Ainsi dune façon générale, l'activité d'un catalyseur est une valeur inversement proportionnelle au volume de catalyseur utilisé pour procéder à une réaction de raffinage. Or en opérant selon l'invention, on a constaté que pour obtenir sur une même réaction de raffinage, des performances identiques, on utilise environ 5% en moins de volume de catalyseur par rapport au volume utilisé d'un catalyseur sulfuré par $H_2S$, et environ 2% en moins de volume de catalyseur par rapport au volume utilisé d'un catalyseur sulfuré selon la méthode de la demande de brevet européen EP-A-130 850.

On notera que pour effectuer cette deuxième partie de la deuxième étape, il peut être avantageux d'opérer à la fois en présence d'hydrogène et en présence d'une coupe liquide d'hydrocarbures; de préférence, par exemple, on utilisera une partie au moins de la coupe à traiter ultérieurement sur ledit catalyseur. Cette méthode permet, puisque la deuxième partie de la deuxième étape est légèrement exothermique, de profiter de la présence d'un liquide qui mouille le catalyseur, permettant ainsi une meilleure évaporation des calories. En outre cette technique permet d'améliorer les qualités du catalyseur.

Au cours de la première étape du procédé de traitement de catalyseur, on peut opérer l'incorporation «ex situ» du polysulfure dans la porosité du catalyseur, en présence d'au moins un additif possédant des propriétés de réducteur et qui est choisi dans le groupe constitué par les aldéhydes renfermant 4 à 14 atomes de carbone par molécule (et de préférence 5 à 12 atomes de carbone), les cétones ou polycétones renfermant 3 à 18 (et de préférence 5 à 12) atomes de carbone par molécule, les éthers renfermant 5 à 14 (de préference 6 à 12) atomes de carbone par molécule, les alcools ou polyalcools renfermant 5 à 14 (et de préférence 6 à 12 atomes de carbone par molécule et les acides organiques ou polyacides renfermant 3 à 14 (et de préférence 6 à 12 atomes de carbone par molécule).

On utilisera, en poids, avantageusement 0,4 à 8%, de préférence 0,8 à 4% et plus particulièrement 0,9 à 3% de l'additif ou des additifs choisis par rapport au poids du polysulfure ou des polysulfures utilisés.

Le ou les additifs peuvent être ajoutés, par exemple, avec la solution du ou des polysulfures utilisés, soit à l'état pur, soit dissous dans un solvant adéquat. Ce solvant peut être du même type que le solvant choisi pour dissoudre le polysulfure, à savoir, par exemple:

- une essence légère bouillant par exemple entre environ 60 et 95°C,
- une essence de type hexane bouillant entre 63 et 68°C environ,
- une essence de type F bouillant entre environ 100 et 160°C et contenant généralement 10 à 20% d'hydrocarbures aromatiques, par exemple 15% (en volume),
- une essence de type «white spirit» bouillant entre environ 150 et 250°C et renfermant généralement 14 à 22% d'hydrocarbures aromatiques, par exemple 17%, en volume,
- toute coupe hydrocarbonée ou non, équivalente aux essence précédentes.

L'additif ou les additifs selon l'invention, peuvent être utilisés dans un autre solvant tel que, par exemple, les alcools (méthanol, éthanol, propanol, etc....) ou d'autres liquides minéraux ou organiques connus pour dissoudre les aldéhydes, les cétones, les éthers, les alcools, polyalcools, acides et polyacides utilisables selon la présente invention.

Parmi les additifs préférés, on peut citer notamment l'acétyl acétone, la dicétone, l'acétonyl acétone, l'acide lactique et l'acide citrique.

Le rôle de l'additif utilisé, est de pouvoir augmenter, au cours de la première partie de la deuxième étape, le degré de réduction des oxydes métalliques, de réduire ces oxydes beaucoup plus vite, de favoriser ainsi la cinétique du remplacement d'oxygène par le soufre et de favoriser en outre la dispersion des métaux dans le catalyseur.

En conséquence, le démarrage des réactions proprement dites de raffinage ou d'hydroconversion se trouvera accéléreé.

*Exemples*

Dans les exemples 1 à 3 qui vont suivre, on va étudier, pour un hydroraffinage ou un hydrotraitement

d'une coup2 hydrocarbonnée l'incidence de la méthode de régénération de catalyseur adoptée.

La coupe que l'on se propose d'hydroraffiner est une charge modèle renfermant en poids:

20% de toluène
2% de thiophène
78% de cyclohexane

Les conditions opératoires sont les suivantes:

| | |
|---|---|
| Température: | 350°C |
| Pression totale: | 60 bars (6 MPa) |
| VVH (vitesse spatiale): | 2 l.charge/l.catalyseur/heurs |
| $H_2$/HC (hydrogène/hydrocarbures) | 350 l/h |
| Durée du traitement: | 48 heures |
| Volume du catalyseur mis en jeu: | 40 cc dans les 3 exemples 1 à 3 en vue de déterminer la voie donnant les meilleures peformances. |

L'analyse des effluents est effectuée par chromatographie en phase gazeuse. On mesurera dans chaque test l'activité en hydrogénation («A») du toluène et l'activité en isomérisation («I») du cyclohexane en méthylcyclopentane;

$$A = \text{Log} \frac{1}{1 - X}$$

(logarithme népérien) où X est le taux de conversion du toluène, c'est-à-dire

$$X = \frac{\sum_P}{\sum_T}$$

$\sum_P$ représentant la somme des titres molaires des produits de conversion du toluène (méthylcyclohexane, éthylcyclopentane et les diméthylcyclopentanes) et $\sum_T$ représentant la somme $\sum_P$ + titre de toluène résiduel.

X est compris entre 0 et 1, X étant égal à 1 pour une conversion à 100% du toluène.

$$I = 100 \times \frac{\text{Titre molaire du méthylcyclopentane}}{\text{(Titre molaire en méthylcyclopentane + titre molaire en cyclohexane résiduel)}}$$

(l'activité en isomérisation I permet de mesurer l'acidité du catalyseur).

Le catalyseur utilisé est un catalyseur commercial de la société Procatalyse HR 346 renfermant en poids 3% d'oxyde de Nickel NiO et 14% d'oxyde de molybdène $MoO_3$, ces composés de métaux actifs étant déposés sur une alumine γ.

*Exemple 1:* (comparatif)

Avant le démarrage de l'hydroraffinage, on procède à la présulfuration du catalyseur selon une méthode conventionnelle, en opérant de la façon suivante:

On charge dans le réacteur, le catalyseur dont les métaux actifs sont sous la forme de leurs oxydes NiO et $MoO_3$.

On purge l'unité sous hydrogène, à froid, et sous une pression de 1 bar (0,1 MPa) (on a vérifié que les résultats seraient les mêmes si cette étape était effectuée sous une forte pression, 60 bars (6 MPa) par exemple).

On chauffe le catalyseur à 150°C sous hydrogène, sous 1 bar (ou 60 bars).

On injecte à l'entrée du réacteur, dont la température est 150°C (sous 60 bars de pression) une charge de sulfuration contenant en poids:

20% de toluène
2% de diméthyldisulfure (DMDS)
78% de cyclohexane ($CC_6$)

Le diméthyldisulfure provoque la sulfuration des oxydes de nickel et de molybdène. Les conditions opératoires de sulfuration sont les suivantes:

VVH: 2
$H_2$/HC: 350 l/h

On augmente la température à 280°C et l'on poursuit la sulfuration 2 heures, puis on porte la température à 320°C pendant deux heures et enfin on porte la température à 350°C pendant encore deux heures. La sulfuration du catalyseur étant effectuée, on substitue alors à la charge de sulfuration, la charge à hydroraffiner et l'on procède à l'hydroraffinage de cette charge dans les conditions opératoires données plus haut.

Résultats:

A = 0,79
I = 0,29

*Exemple 2:* (comparatif)

Dans cet exemple, on procède à une sulfuration du catalyseur en opérant selon la méthode de la demande du brevet européen EP-A-130 850, en deux étapes:

*Première étape:*

On utilise pour la présulfuration du catalyseur, le TPS 37, fabriqué par Elf Aquitaine et renfermant environ 37% en poids de soufre environ, (la formule a été donnée dans la partie générale de cette demande de brevet); pour que l'ensemble du polysulfure soit adsorbé, il faut utiliser un volume de réactif (polysulfure + solvant du polysulfure) égal au volume d'imprégnation de la charge de catalyseur traité. C'est la connaissance de ce volume poreux total, ou volume d'imprégnation, qui détermine la quantité de solvant à utiliser. Dans le cadre de présent essai, ce volume, pour 100 g de catalyseur, est de 45 ml en moyenne (dont 60% de solvant et 40% de polysulfure). Le solvant utilisé est un White Spirit (température d'ébullition entre 150 et 250°C).

On utilise la stoechiométrie en soufre nécessaire pour sulfurer ultérieurement la totalité des oxydes (NiO, $MoO_3$) soit 7,1% S. On procède ainsi à l'imprégnation à sec du catalyseur, suivie d'une évaporation sous 10 mm de mercure (13600 Pa) ou sous courant de gaz inerte.

*Deuxième étape:*

Le catalyseur dont les métaux sont sous forme d'oxydes et renfermant du soufre dans sa porosité, est introduit dans le réacteur. Le réacteur est purgé de son air et on le met en atmosphère d'hydrogène à froid, sous 1 bar (les résultats ultérieurs ne sont pas modifiés si la pression adoptée avait été plus forte, 60 bars par exemple). On chauffe le catalyseur imprégné de polysulfure, sous hydrogène à 150°C et on maintient la température 2 heures à 150°C. Le catalyseur devient noir, ceci étant dû à la formation des sulfures métalliques. L'analyse du catalyseur sulfuré au TPS 37 donne comme valeur en soufre 7,4% S (poids) ainsi qu'une valeur en carbone de 2% (poids).

*Test d'hydroraffinage:*

On porte la pression dans le réacteur à 60 bars et on monte la température, sans palier, à 350°C.

*Résultats:*

A = 0,81
I = 0,40

*Exemple 3:* (selon l'invention)
La première étape est identique à la première étape de l'exemple 2.

*Deuxième étape:*

1) *Première partie de la deuxième étape:*

Le catalyseur est introduit dans le réacteur. On purge à froid pour chasser l'air. On met le réacteur en atmosphère d'azote, sous une pression d'un bar (on obtiendrait les mêmes résultats sous une pression plus élevée, par exemple 60 bars).

On chauffe le catalyseur, pendant deux heures.

Pour illustrer l'invention, on opère 4 tests distincts, chacun d'eux étant réalisé à une température différente.

Un test $T_1$ est effectué à 150°C
Un test $T_2$ est effectué à 100°C
Un test $T_3$ est effectué à 75°C
Un test $T_4$ est effectué à 275°C

Dans chaque test, le catalyseur devient noir, les oxydes se transformant en sulfures. A l'issue de chaque test, le catalyseur renferme 7,1% de soufre (poids). La teneur en carbone (poids) est de 3% dans les tests $T_1$ et $T_4$, 1% dans le test $T_2$ et 3,5% dans le test $T_3$.

2) *Deuxième partie de la deuxième étape et tests d'Hydroraffinage:*

On met le réacteur sous atmosphère d'hydrogène, à froid. La pression est portée à 60 bars et la température à 150°C.

On procède à l'injection de la charge comme dans les deux exemples précédents, puis on porte la température à 300°C pendant 1 heure puis à 350°C pour le test.

A titre illustratif, les résultats sont donnés dans le tableau suivant en utilisant pour réaliser la première partie de la première étape, quatre températures différentes, à savoir 150°C (test $T_1$), 100°C (Test $T_2$), et 275°C (Test $T_4$) et 75°C (Test $T_3$).

| Température (°C) | 150 | 100 | 275 | 75 |
|---|---|---|---|---|
| A | 0,82 | 0,85 | 0,75 | 0,68 |
| I | 0,74 | 1,2 | 0,74 | 0,55 |

A noter qu'on a vérifié que les résultats sont les mêmes si la première partie de la deuxième étape est effectuée sur le site de la présulfuration. Cela signifie que le transport du catalyseur et sa manipulation à l'air n'ont entrainé aucun dommage pour ce catalyseur.

*Exemple 4* (selon l'invention)
La première étape est identique à la première étape de l'exemple 2.

*Deuxième étape*

1) *Première partie de la deuxième étape*

Le catalyseur est introduit dans le réacteur. On met le réacteur sous la pression d'un bar en présence d'air. (On obtiendrait les mêmes résultats sous une pression plus élevée, par exemple 60 bars). On chauffe le catalyseur pendant 1 heure. Pour illustrer l'invention, on opère 5 tests distincts, chacun d'eux étant réalisé à une température différente:

le test Ta est réalisé à 115°C
le test Tb est réalisé à 120°C
le test Tc est réalisé à 150°C
le test Td est réalisé à 200°C
le test Te est réalisé à 250°C

Le catalyseur devient noir entre 115°C et 200°C environ, avec dépôt d'eau.

Le $SO_2$ dans les effluents gazeux est mesuré à l'aide d'un analyseur infrarouge de marque COSMA.

Les teneurs en soufre en poids, dans le catalyseur après chaque test sont les suivantes:

| | Ta | Tb | Tc | Td | Te |
|---|---|---|---|---|---|
| % S | 6,00 | 6,10 | 5,95 | 5,50 | 2,95 |

2) *Deuxième partie de la deuxième étape et tests d'hydroraffinage.*

La deuxième partie de la deuxième étape est ici identique à celle de l'exemple 3.

Les tests d'hydroraffinage sont effectués comme dans l'exemple 3, c'est-à-dire que, après avoir laissé le catalyseur, en présence d'hydrogène et de la charge à 300°C pendant une heure, (2ème partie de la deuxième étape), on procède au test à 350°C.

Les résultats obtenus sont donnés dans le tableau ci-dessous en fonction de la nature de la première partie de la deuxième étape:

| Nature de la première partie de la deuxième étape | Ta | Tb | Tc | Td | Te |
|---|---|---|---|---|---|
| A | 0,81 | 0,83 | 0,83 | 0,80 | 0,20 |
| I | 0,75 | 0,78 | 0,74 | 0,60 | 0,1 |

Pendant la première partie de la deuxième étape, on peut opérer non pas en présence d'air mais par exemple avec un mélange de 5% en volume d'air d'une part et de 95% en volume de vapeur d'eau initialement surchauffée à 115°C d'autre part. On obtiendrait ainsi, par exemple dans l'essai Tc: A = 1,10 et 1 = 1,03.

*Exemple 5*

On procède comme dans l'exemple 4. Toutefois, la deuxième partie de la deuxième étape est effectuée ici sous hydrogène à 300°C pendant 10 minutes, puis ensuite, on injecte la charge d'hydroraffinage et on monte la température à 350°C.

Le résultat du test est identique pour chacune des 3 méthodes Ta, Tb et Tc utilisées en première partie de la deuxième étape:

A: 0,83
I: 0,73

*Exemple 6*

On procède comme pour l'exemple 5, en injectant ici la charge hydrocarbonée, en présence d'hydrogène, dès que la température atteint 150°C. Les résultats du test, sont les suivants (pour les 3 méthodes Ta, Tb, et Tc):

A: 0,85
I: 0,77

*Exemple 7*

Lorsque le catalyseur sulfuré selon l'invention est destiné à être utilisé dans une réaction de raffinage dont la température est inférieure à 275°C (par exemple un prétraitement de charge de reforming), il convient donc, conformément à l'invention, que le catalyseur lors de la deuxième partie de la deuxième étape, soit d'abord porté au moins une heure à au moins 275°C, par exemple une heure à 350°C ou 2 heures à 300°C. En effet, la chimisorption de l'oxygène permet de constater qu'il y a une relation directe entre la vitesse de sulfuration et la prise d'oxygène, (exprimée par exemple en mole d'oxygène par gramme de catalyseur). Ainsi, pour étudier l'activité du catalyseur de l'exemple 3, soumis au préalable à la première partie de la deuxième étape, pendant 2 heures à 150°C (dans les conditions de l'exemple 3), on soumet ce catalyseur dans une cellule de chimisorption à diverses températures, sous atmosphère d'argon, pendant une heure. Après chaque manipulation, on mesure la prise d'oxygène.

| Température (°C) | Mesure de l'adsorption d'oxygène (unité utilisée: $10^{-4}$ mole d'oxygène par g de catalyseur) |
|---|---|
| 150 | 0 |
| 200 | ⩽ 0,02 |
| 250 | ⩽ 0,01 |
| 275 | 0,5 |
| 300 | 1 |
| 350 | 1,8 |
| 400 | 1,8 |

Ce tableau montre que l'activité du catalyseur ne se développe qu'à partir de 275°C environ. Si le catalyseur n'atteint pas cette température, il reste inerte vis-à-vis de l'oxygène; donc en contrepartie; il reste manipulable à l'air, donc transportable tant que la deuxième partie de la deuxième étape n'est pas faite.

*Exemple 8*

On réalise une présulfuration ex-situ d'un catalyseur HR 346 en procédant comme dans l'exemple 4 (avec méthode Tc). A l'issue de la première partie de la 2è étape réalisée sous air, on vérifie que le catalyseur ne chimisorbe pas d'oxygène. On le stocke en flacon fermé non hermétique, sous air, pendant 15 jours, Il n'y a pas d'évolution apparente. On le met en œuvre dans un réacteur de CATATEST, et on procède à un test d'HDS (hydrodésulfurisation) et d'hydrodésazotation d'un gas oil de coking: le catalyseur une fois chargé, le réacteur est purgé d'air, puis mis en balayage d'$H_2$ à forid, la pression est portée à 100 bars (10 MPa). On chauffe. On injecte la charge de gas oil lorsque le catalyseur a atteint 150°C. On monte jusqu'à 300°C et on reste 15 mm en palier à cette température, puis on maintien la température de réaction (300°C) et on procède à ce test très représentatif de conditions industrielles d'utilisation du catalyseur.

Les conditions de test sont indiquées au tableau 2. Les caractéristiques de la charge de gas oil de coking au tableau 1.

Les performance un HDS et HDN (hydrodéazotation) stabilisées après 60 heures puis 120 heures de fonctionnement en continu, sont comparées aux performances obtenues dans les mêmes conditions, sur le même catalyseur, mais présulfuré in-situ de la manière décrite à l'exemple 1:

| | 100 bars VVH = 4 après 60 h | | 60 bars VVH = 2 après 120 h | |
|---|---|---|---|---|
| | HDS | HDN | HDS | HDN |
| référence | 96,4 | 84,6 | 97,0 | 81,0 |
| catalyseur présulfuré selon l'invention | 95,7 | 85,7 | 97,3 | 82,7 |

La technique de présulfuration ex-situ sous air donne un résultat meilleur que la technique de présulfuration de référence.

TABLEAU 1

*Caractéristiques de la charge de test.*

| CHARGE | GO* de COKING |
|---|---|
| Densité à 20 oC) (g/cm$^3$) | 0,857 |
| Soufre (% pds) | 0,45 |
| Azote (ppm pds) | 420 |
| Poids moléculaire moyen (g) | 205 |
| Indice de Brome (g%g) | 17 |
| Point de trouble (oC) | -9 |
| Indice de cétane | 40 |
| Distillation | NF M07-002 |
| PI (oC) | 161 |
| 5% » | 194 |
| 10% » | 203 |
| 50% » | 256 |
| 90% » | 328 |
| 95% » | 338 |
| PF » | 350 |

* Gasoil

TABLEAU 2

*Caractéristiques du test catalytique*

| | TEST GO COKING |
|---|---|
| Palier 1 | |
| Pression totale (bars) | 100 |
| Température (°C) | 360 |
| V.V.H. | 4 |
| Rapport H2/HC (N1/1) | 250 |
| Durée (heures) | 60 |
| Palier 2 | |
| Pression totale (bars) | 60 |
| Température (°C) | 360 |
| V.V.H. | 2 |
| Rapport H2/HC | 250 |
| Durée (heures) | 60 |
| Volume de catalyseur (cm$^3$) | 50 |
| Présulfuration par charge toluène + $CC_6$ + DMDS | |

**Revendications**

1. Procédé de traitement en deux étapes d'un catalyseur neuf ou régénéré renfermant (a) un support à base d'au moins un oxyde d'un métal ou d'un métalloïde et (b) au moins un métal actif, procédé dans lequel, dans une première étape réalisée «ex situ» entre 0 et 50°C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale

$$R - S_{(n)} - R'$$

où n est un nombre entier de 3 à 20 et où R' représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles c'est-à-dire saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode caractérisée en ce que (a) on traite (première partie de la deuxième étape) le catalyseur, en l'absence d'hydrogène et en présence d'un gaz inerte ou d'un gaz non inerte, pendant au moins 5 minutes environ, «in situ» ou «ex situ», à une température comprise entre 65 et 275°C, sous une pression comprise entre environ 0,5 et 70 bars, le catalyseur étant à ce stade éventuellement séché, (b) on traite ensuite ce catalyseur (deuxième partie de la deuxième étape), pendant au moins 1 minute à une température d'au moins 275°C.

2. Procédé selon la revendication 1 dans lequel au cours de ladite première partie de la deuxième étape, on opère en présence d'un gaz inerte, la température étant comprise entre 75 et 275°C.

3. Procédé selon la revendication 2 dans lequel la température de ladite première partie de la deuxième étape est comprise entre 85 et 260°C, la durée de cette première partie de la première étape étant comprise pendant 1 à 3 heures environ, la température de ladite deuxième partie de la deuxième étape étant comprise entre 300 et 400°C.

4. Procédé selon la revendication 1 dans lequel au cours de ladite première partie de la deuxième étape, on opère en présence d'air, pendant une période de temps comprise entre 5 minutes et 10 heures, à une température inférieure à 200°C.

5. Procédé selon la revendication 4 dans lequel au cours de ladite première partie de ladite deuxième étape, on opère en présence d'air, pendant une période de temps comprise entre 9 minutes et 10 heures, à une température inférieure à 150°C, la température de ladite deuxième partie de la deuxième étape étant comprise entre 275 et 380°C.

6. Procédé selon la revendication 1 dans lequel ledit gaz est au moins en partie de la vapeur d'eau surchauffée à une température supérieure à 110°C.

7. Procédé selon la revendication 4 dans lequel le gaz est de l'air humide.

8. Procédé selon l'une des revendications 2 et 4 dans lequel la deuxième partie de ladite deuxième étape est réalisée «in situ».

9. Procédé selon l'une des revendications 2 et 4 dans lequel la deuxième partie de la dite deuxième étape est réalisée «ex situ».

10. Procédé selon la revendication 3 dans lequel ladite première partie de ladite deuxième étape est effectuée «in situ».

11. Procédé selon la revendication 9 dans lequel ladite première partie de la première étape est effectuée «ex situ».

12. Procédé selon l'une des revendications 1 à 11 appliqué soit au traitement d'un catalyseur neuf, préalablement à son emploi, soit appliqué au traitement d'un catalyseur, préalablement à son emploi, ledit catalyseur venant d'être soumis à une régénération hors site.

13. Procédé selon l'une des revendications 1 à 12, dans lequel la deuxième partie de la deuxième étape est effectuée en présence d'hydrogène.

14. Procédé selon la revendication 13 dans lequel on opère en outre en présence d'une coupe liquide hydrocarbonée.

15. Procédé selon la revendication 14 dans lequel la coupe hydrocarbonée est au moins une partie de la coupe à traiter ultérieurement sur le catalyseur.

16. Procédé selon l'une des revendications 1 à 15, dans lequel dans la formule $R - S_{(n)} - R'$, n est un nombre entier compris entre 4 à 8, R et R' renfermant chacun 5 à 40 atomes de carbone par molécule.

17. Procédé selon l'une des revendications 1 à 16 caractérisé en ce que, en première étape, l'on opère en présence de 0,4 à 8% en poids par rapport au poids de polysulfure d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

18. Utilisation du procédé selon l'une des revendications 1 à 17 appliquée à la chimisorption de l'oxygène.

**Patentansprüche**

1. Verfahren zur zweistufigen Behandlung eines neuen oder regenerierten Katalysators, der (a) einen Träger, der mindestens aus einem Metall- oder einem Nichtmetalloxid besteht und (b) mindestens ein aktives Metall enthält, wobei man während einer 1. Stufe, die «ex situ» zwischen ungefähr 0 und 50°C, in Abwesenheit von Wasserstoff, verwirklicht wird, den Katalysator mit mindestens einem Schwefelungsmittel behandelt, sodass dieses Mittel teilweise oder völlig in die Poren des Katalysators zugeführt wird, wobei das Schwefelungsmittel übrigens ein Polysulfid mit folgender Grundformel ist:

$$R - S_{(n)} - R'$$

indem n eine ganze Zahl von 3 bis 20 und R' ein Wasserstoffatom oder ein anderes Radikal, identisch oder abweichend von dem Radikal R, ist, jedes der zwei Radikale stellt also ein organisches Radikal dar, das 1 bis 150 Kohlenstoffatome pro Molekül enthält, die Radikale werden aus der Gruppe der Alkylradikale ausgewählt, das heisst gesättigt oder ungesättigt, linear oder verzweigt oder des naphthenischen Typs, der Arylradikale, der Alkylarylradikale und der Arylalkylradikale und das Schwefelungsmittel wird also in Lösung in einem Lösemittel verwendet, wobei der Katalysator dann gegebenenfalls getrocknet wird, und wobei man während einer 2. Stufe der während der 1. Stufe erhaltene Katalysator durch ein Verfahren behandelt, dadurch gekennzeichnet, dass (a) der Katalysator (1. Teil der 2. Stufe) in Abwesenheit von Wasserstoff und in Anwesenheit von einem Inert- oder Nichtinertgas während mindestens 5 Min. ungefähr, «in situ» oder «ex situ», bei einer Temperatur von 65 bis 275°C, behandelt wird, bei einem Druck von circa 0,5 bis 70 Bar, dann wird er gegebenenfalls getrocknet, (b) endlich wird der Katalysator (2. Teil der 2. Stufe) während mindestens 1 Min. bei einer Temperatur von mindestens 275°C behandelt.

2. Verfahren nach Anspruch 1, dadurch gekennzeichnet, dass man im Laufe des 1. Teils der 2. Stufe in Anwesenheit eines Inertgas verfährt, indem die Temperatur zwischen 75 und 275°C liegt.

3. Verfahren nach Anspruch 2, dadurch gekennzeichnet, dass die Temperatur des 1. Teils der 2. Stufe zwischen 85 und 260°C liegt, wobei dieser 1. Teil während der 1. Stufe zwischen 1 und 3 Stunden dauert, indem die Temperatur des 2. Teils der 2. Stufe zwischen 300 und 400°C liegt.

4. Verfahren nach Anspruch 1, dadurch gekennzeichnet, dass man während dem 1. Teil der 2. Stufe in Anwesenheit von Luft handelt, während einer Zeitspanne, die zwischen 5 Min. und 10 Stunden liegt, bei einer Temperatur niedriger als 200°C.

5. Verfahren nach Anspruch 4, dadurch gekennzeichnet, dass man während dem 1. Teil der 2. Stufe in Anwesenheit von Luft handelt, während einer Dauer zwischen 9 Min. und 10 Stunden, bei einer Temperatur niedriger als 150°C, indem die Temperatur des 2. Teils dieser 2. Stufe zwischen 275 und 380°C liegt.

6. Verfahren nach Anspruch 1, dadurch gekennzeichnet, dass das Gas wenigstens teilweise Wasserdampf ist, der bei einer Temperatur über 110°C überhitzen wird.

7. Verfahren nach Anspruch 4, dadurch gekennzeichnet, dass das Gas feuchte Luft ist.

8. Verfahren nach einem der Ansprüche 2 und 4, dadurch gekennzeichnet, dass der 2. Teil dieser 2. Stufe «in situ» verwirklicht wird.

9. Verfahren nach einem der Ansprüche 2 und 4, dadurch gekennzeichnet, dass der 2. Teil dieser 2. Stufe «ex situ» verwirklicht wird.

10. Verfahren nach Anspruch 3, dadurch gekennzeichnet, dass der 1. Teil dieser 2. Stufe «in situ» verwirklicht wird.

11. Verfahren nach Anspruch 9, dadurch gekennzeichnet, dass der 1. Teil der 1. Stufe «ex situ» verwirklicht wird.

12. Verfahren nach einem der Ansprüche 1 bis 11, dadurch gekennzeichnet, dass es entweder an der Behandlung eines neuen Katalysators vor seiner Verwendung oder an der Behandlung eines Katalysators vor der Verwendung, nachdem er einer Auffrischung «ex situ» unterworfen wurde, angewandt wird.

13. Verfahren nach einem der Ansprüche 1 bis 12, dadurch gekennzeichnet, dass der 2. Teil der 2. Stufe in Anwesenheit von Wasserstoff verwirklicht wird.

14. Verfahren nach Anspruch 13, dadurch gekennzeichnet, dass man ausserdem in Anwesenheit eines kohlenwasserstoffhaltigen flüssigen Anteils handelt.

15. Verfahren nach Anspruch 14, dadurch gekennzeichnet, dass der kohlenwasserstoffhaltige Anteil mindestens ein Teil des später auf dem Katalysator zu behandelnden Anteils ist.

16. Verfahren nach einem der Ansprüche 1 bis 15, dadurch gekennzeichnet, dass in der Formel $R - S_{(n)} - R'$, n eine ganze Zahl von 4 bis 8 darstellt, indem R und R' je 5 bis 40 Kohlenstoffatome pro Molekül enthalten.

17. Verfahren nach einem der Ansprüche 1 bis 16, dadurch gekennzeichnet, dass man während der 1. Stufe in Anwesenheit von 0,4 bis 8 Gew.-%, bezogen auf das Polysulfidgewicht von mindestens einem Additiv aus der Gruppe der Aldehyde mit 4 bis 14 Kohlenstoffatome pro Molekül, der Ketone oder der Polyketone mit 3 bis 18 Kohlenstoffatome pro Molekül, der Äther mit 5 bis 14 Kohlenstoffatome pro Molekül, der Alkohole oder der Polyalkohole mit 5 bis 14 Kohlenstoffatome pro Molekül und der organischen Säuren oder Polysäuren mit 3 bis 14 Kohlenstoffatome pro Molekül, handelt.

18. Anwendung des Verfahrens nach einem der Ansprüche 1 bis 17, dadurch gekennzeichnet, dass es für die Chemosorption des Sauerstoffs angewandt wird.

**Claims**

1. A process for a two-steps treatment of a fresh or regenerated catalyst containing (a) a carrier mostly consisting of at least one metal or metalloid oxide and (b) at least one active metal wherein, in a first step performed «ex-situ» at a temperature from about 0 to 50°C and in absence of hydrogen, the catalyst is treated with at least one sulfurization agent, so as to partially or completely incorporate said agent in the catalyst pores, the sulfurization agent being a polysulfide of general formula:

$$R - S_{(n)} - R'$$

Wherein n is an integer from 3 to 20 and R' is a hydrogen atom or another radical identical to or different from radical R, these two radicals thus representing each an organic radical containing 1 to 150 carbon atoms per molecule, said radicals being selected from the group consisting of alkyl radicals, i.e. saturated or unsaturated, linear or branched radicals or radicals of the naphthenic type, aryl radicals, alkylaryl radicals and arylalkyl radicals, said sulfurization agent being used in solution in a solvent, the catalyst being then optionally dried, said process further comprising a second step of treating the catalyst obtained in the first step by a method characterized in that (a) the catalyst, in the first part of second step, is treated, in the absence of hydrogen and in the presence of an inert or non-inert gas, for at least about 5 minutes, «in situ» or «ex-situ» at a temperature from 65 to 275°C, under a pressure from about 0.5 to 70 bars, the catalyst being, at this stage, optionally dried and (b) said catalyst is then treated, in the second part of said second step, for at least 1 minute at a temperature of at least 275°C.

2. A process according to claim 1, wherein the first part of said second step is conducted in the presence of an inert gas at a temperature ranging from 75 to 275°C.

3. A process acording to claim 2, wherein the temperature in said first part of the second step is from 85 to 260°C, said first part of the first step lasting about 1 to 3 hours, the temperature in said second part of the second step being from 300 to 400°C.

4. A process according to claim 1, wherein the first part of the second step is conducted in the presence of air for a time period from 5 minutes to 10 hours, at a temperature lower than 200°C.

5. A process according to claim 4, wherein the first part of said second step is conducted in the presence of air, for a time period from 9 minutes to 10 hours, at a temperature lower than 150°C, the temperature of said second part of the second step being from 275 to 380°C.

6. A process according to claim 1, wherein said gas consists of at least steam overheated at a temperature higher than 110°C.

7. A process according to claim 4, wherein said gas is wet air.

8. A process according to one of claims 2 to 4, wherein the second part of said second step is performed «in situ».

9. A process according to one of claims 2 to 4, wherein the second part of said second step is performed «ex situ».

10. A process according to claim 3, wherein the first part of said second step is performed «in situ».

11. A process according to claim 9, wherein said first part of said first step is performed «ex situ».

12. A process according to one of claims 1 to 11, applied either to the treatment of a fresh catalyst, before its use, or to the treatment of a catalyst which has just been subjected to a regeneration out of site, before its use.

13. A process according to one of claims 1 to 12, wherein the second part of the second step is performed in the presence of hydrogen.

14. A process according to claim 13, wherein the operation is conducted in the presence of a liquid hydrocarbon cut.

15. A process according to claim 14, wherein the hydrocarbon cut is at least a part of the cut to be subsequently treated over the catalyst.

16. A process according to one of claims 1 to 15, wherein, in the formula $R - S_{(n)} - R'$, n is an integer from 4 to 8, R and R' containing each 5 to 40 carbon atoms per molecule.

17. A process according to one of claims 1 to 6, characterized in that the first step is conducted in the presence of 0.4 to 8% by weight, with respect to the polysulfide weight, of at least one additive selected

from the group consisting of aldehydes containing 4 to 14 carbon atoms per molecule, ketones or polyketones containing 3 to 18 carbon atoms per molecule, alcohols or polyalcohols containing 5 to 14 carbon atoms per molecule and organic acids or polyacids containing 3 to 14 carbon atoms per molecule.

18. The use of the process according to one of claims 1 to 17 applied to oxygen chemisorption.